# EUROPÄISCHE PATENTSCHRIFT

(11) **EP 1 370 073 B1**
(45) Veröffentlichungstag und Bekanntmachung des Hinweises auf die Patenterteilung: **06.10.2010**
(21) Anmeldenummer: 03005889.5
(22) Anmeldetag: 17.03.2003
(51) Int. Cl.: H04N 3/15

(54) **Bildauflösende Detektoranordnung**
Image resolving sensor
Détecteur de résolution d'image

(30) Priorität: 06.06.2002 DE 10225340
(43) Veröffentlichungstag der Anmeldung: 10.12.2003
(73) Patentinhaber: Diehl BGT Defence GmbH & Co.KG, 88662 Überlingen (DE)
(72) Erfinder: Krogmann, Dirk, 88662 Überlingen (DE); Tholl, Hans-Dieter, Dr., 88690 Uhldingen (DE)
(74) Vertreter: Diehl Patentabteilung

(56) Entgegenhaltungen:
- DE-A1- 19 904 914
- US-A- 5 059 008

## Beschreibung

### Technisches Gebiet

Die Erfindung betrifft eine bildauflösende Detektoranordnung, auf welcher durch ein abbildendes optisches System ein Bild einer Objektszene erzeugbar ist, mit einer zweidimensionalen Anordnung von Detektorelementen, wobei jedem Detektorelement ein Bildbereich in einer Bildebene zugeordnet ist und diese Bildbereiche ein Rastermaß definieren, mit einem in dieser Bildebene angeordneten Mikroblendenraster, welches ein erstes sich mit entsprechend dem Rastermaß der Bildbereiche wiederholendes Muster von durchlässigen und opaken Teilbereichen bildet, wobei das Mikroblendenraster in dieser Bildebene schrittweise beweglich ist, derart dass in jeder Stellung nur Strahlung von einem Teilbereich jedes einem Detektorelement zugeordneten Bildbereichs auf das Detektorelement gelangt.

### Stand der Technik

Eine solche bildauflösende Detektoranordnung ist aus der DE 199 04 914.9 bekannt. Die Detektoranordnung umfasst ein Detektorarray mit einer Vielzahl von Detektorelementen, welche in Zeilen und Spalten angeordnet sind. Um das Blickfeld der Anordnung zu erhöhen ohne den Detektor zu vergrößern oder die Auflösung zu verschlechtern, ist fest vor dem Detektor ein mikrooptisches Streulinsenraster vorgesehen. Diese als mikrooptischen Linsen ausgebildeten Linsen sind ebenfalls in Zeilen und Spalten angeordnet. Die Abmessungen der Mikro-Streulinsen sind so gewählt, dass jeweils die Strahlung, welche durch 2 X 2 Mikro-Streulinsen tritt, auf das gleiche Detektorelement fällt. Vor dem Streulinsenraster ist ein bewegliches mikrooptisches Sammellinsenraster vorgesehen. Bei diesem Linsenraster ist in jedem Rasterelement jeweils eine mikrooptische Linse in einem Quadranten vorgesehen. Die drei übrigen Quadranten eines Rasterelements sind opak. Das mikrooptische Sammellinsenraster kann mittels Piezoelementen zeitlich nacheinander zweidimensional verschoben werden. Dadurch kann die mikrooptische Sammellinse jeweils an die Stelle der opaken Rasterteile geschoben werden. Es fällt also bei jeder Stellung ein unterschiedlicher Teil des Blickfeldes auf den Detektor. Die Teile können dann mittels geeigneter Auswertung zu einem vergrößerten Blickfeld zusammengesetzt werden.

Bei der DE 43 27 944 Al wird durch ein abbildendes optisches System ein Bild einer Objektszene erzeugt. Das Bild wird von einem bildauflösenden Detektor mit einer zweidimensionalen Anordnung von Detektorelementen erfaßt. Unmittelbar vor dem Detektor sitzt ein Mikroblendenraster. Dieses Mikroblendenraster weist für jede von einem Detektorelement erfaßte Teilfläche des Bildes eine Mikroblende auf, die einen Quadranten freiläßt und den Rest der Teilfläche abdeckt .Diese Mikroblende wird nun durch einen Maskenschieber in zwei zueinander senkrechten Richtungen schrittweise bewegt, so daß nacheinander die vier Quadranten der Teilfläche abgetastet werden können. Die so erhaltenen Helligkeitswerte werden dann zu einem elektronischen Bild" höherer Auflösung ineinandergeschachtelt Damit läßt sich das Bild mit vierfach höherer Auflösung erfassen, als dies mit den Detektorelementen allein möglich wäre.

Eine ähnliche Anordnung zeigt die JP 10-93871 A.

Bei den beschriebenen Anordnungen wird ein Blendenraster in zwei verschiedenen Richtungen vor einem festen Linsenraster verschoben. Bei den Stellwegen ergeben sich hier Fehler, die zu einer Rotation des Blendenrasters Führen. Eine solche Rotation des Blendenrasters führt besonders bei den außen liegenden Rasterelementen zu Verfälschungen des Ergebnisses.

Die JP 61264874 A zeigt eine Anordnung, bei welcher vor einem Detektor eine Blende beweglich ist, welche parallele Schlitze von jeweils einer halben Breite der Detektorelemente aufweist, die in einem dem Rastermaß der Detektorelemente entsprechenden Abstand voneinander angeordnet sind. Dadurch wird abwechselnd die eine oder die andere Hälfte jedes Detektorelements abgedeckt. Dabei wird die Blende zwar nur in einer Richtung verstellt. Dafür wird aber jeweils auch nur die Hälfte der Detektorelemente abgedeckt.

Bei der JP 63234766 A und der EP 0 133 890 B geht es darum, das Bild der Objektszene relativ zu den Detektorelementen längs einer quadratischen Bahn schrittweise zu bewegen. Das geschieht bei der EP 0 133 890 B durch einen in vier Stellungen beweglichen Taumelspiegel. Bei der JP 63234766 A wird dies durch zwei um zueinander senkrechte Achsen verschwenkbare, planparallele Platten 6 und 7 erreicht. Dort wird nicht die Auflösung unter die Abmessungen der Detektorelemente erhöht sondern es werden durch eine Bewegung des Bildes auch Bildteile erfasst, die auf fertigungsbedingte Zwischenräume zwischen den einzelnen Detektorelementen fallen.

### Offenbarung der Erfindung

Es ist Aufgabe der Erfindung, eine Anordnung zu schaffen, bei welcher Rotationen des Musters des Biendenrasters bei den Stellbewegungen vermieden werden.

Erfindungsgemäß wird die Aufgabe gelöst durch eine bildauflösende Detektoranordnung, auf welcher durch ein abbildendes optisches System ein Bild einer Objektszene erzeugbar ist.
a) mit einer zweidimensionalen Anordnung von Detektorelementen, wobei jedem Detektorelement ein Bildbereich in einer Bildebene zugeordnet ist und diese Bildbereiche ein Rastermaß definieren,
b) mit einem in dieser Bildebene angeordneten Mikroblendenraster, welches ein erstes sich entsprechend dem Rastermaß der Bildbereiche wiederholendes Muster von durchlässigen und opaken Teilbereichen bildet, indem das Mikroblendenraster schachbrettartig aus Feldern zum abwechselnden Blockieren und Durchlassen von Strahlung aufgebaut ist, so dass einem Bildbereich somit jeweils vier Felder zuzuordnen sind und ein solches Feld einen Teilbereich eines Bildbereichs darstellt,
c) wobei das Mikroblendenraster in dieser Bildebene schrittweise beweglich ist, derart dass in jeder Stellung nur Strahlung von einem Teilbereich jedes einem Detektorelement zugeordneten Bildbereichs auf das Detektorelement gelangt,
d) mit einem weiteren schrittweise beweglichen Mikroblendenraster, welches parallel zu dem ersten Mikroblendenraster angeordnet ist, wobei das weitere Mikroblendenraster ein weiteres sich entsprechend dem Rastermaß der Bildbereiche wiederholendes Muster von durchlässigen und opaken Teilbereichen bildet, indem das weitere Mikroblendenraster aus durchlässigen Streifen und opaken Streifen aufgebaut ist, wobei die Streifen die gleiche Breite wie ein Feld des ersten Mikroblendenrasters aufweisen und einem Blidbereich somit ein Streifen umfassend zwei durchlässige Felder und ein Streifen umfassend zwei opake Felder zuzuordnen ist,
e) wobei sich die Bewegungsrichtung des weiteren Mikroblendenrasters senkrecht zu den Streifen erstreckt,
f) wobei beide Mikrobiendenraster nur in jeweils einer Richtung senkrecht zur optischen Achse beweglich sind, wobei die Bewegungsrichtungen der beiden Mikroblendenraster einen rechten Winkel miteinander bilden und die Schrittweite für beide Mikroblendenraster jeweils dem halben Rastermaß eines Bildbereichs entspricht,
g) wobei durch Überlagerung der Muster der beiden Mikroblendenraster in jeder Stellung der Mikroblendenraster ein Muster gebildet wird, das in jedem Bildbereich jeweils nur einen der betreffenden Stellung zugeordneten durchlässigen Teilbereich aufweist, so dass durch entsprechende Bewegung der Mikroblendenraster nacheinander Strahlung aller Teilbereiche eines einem Detektorelement zugeordneten Bildbereichs auf dieses Detektorelement durchlassbar ist.

Durch die Verwendung von zwei Mikroblendenrastem findet nur eine einachsige laterale Verschiebung gegeneinander statt. Eine Rotation wird vermieden. Dadurch werden die Fehler bei der Blickrichtung vermieden und die Reproduzierbarkeit der Ereignisse erhöht.

Ausgestaltungen der Erfindung sind Gegenstand der Unteransprüche. Ein Ausführungsbeispiel ist nachstehend unter Bezugnahme auf die beigefügten Zeichnungen näher erläutert.

**Kurze Beschreibung der Zeichnungen**
- Fig. 1: ist eine schematische Darstellung des optischen Aufbaus
- Fig. 2: ist eine schematisch-perspektivische Darstellung und veranschaulicht den Aufbau der optischen Systeme zur Erfassung verschiedener Blickfeldabschnitte bei der bildauflösenden Detektoranordnung von Fig. 1
- Fig. 3: ist eine perspektivische Darstellung von zwei mikrooptischen Linsenrastern und eines Detektorausschnitts
- Fig. 4: zeigt den Aufbau eines ersten mikrooptischen Linsenrasters
- Fig. 5: zeigt den Aufbau eines zweiten mikrooptischen Linsenrasters
- Fig. 6: zeigt die mikrooptischen Linsenraster in einer ersten relativen Lage zueinander
- Fig. 7: zeigt die mikrooptischen Linsenraster in einer zweiten relativen Lage zueinander
- Fig.8: zeigt die mikrooptischen Linsenraster in einer dritten relativen Lage zueinander
- Fig.9: zeigt die mikrooptischen Linsenraster in einer vierten relativen Lage zueinander
- Fig. 10: zeigt einen optischen Aufbau analog zu Fig.1 ohne Blickfeld-Erweiterung

### Beschreibung der Ausführungsbeispiele

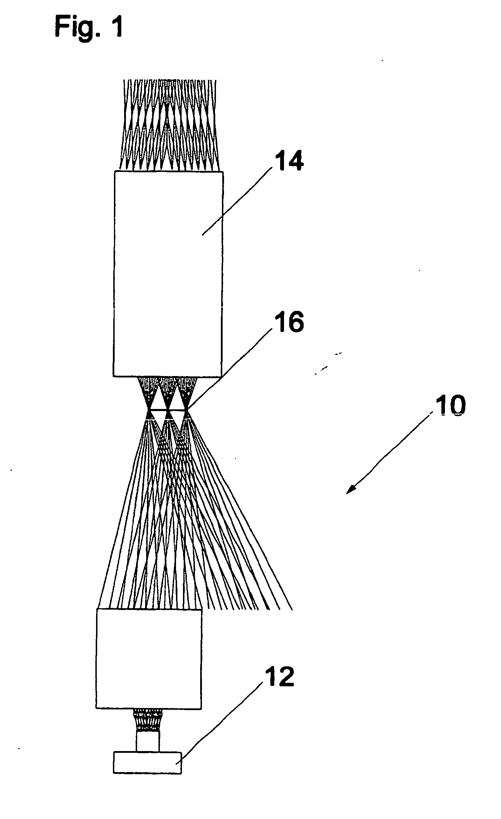

In Fig. 1 ist eine bildauflösende Detektoranordnung 10 dargestellt, die es gestattet, mit einer zweidimensionalen Anordnung 12 von Detektorelementen nacheinander verschiedene Blickfelder oder verschiedene Abschnitte eines Blickfeldes zu erfassen, wobei diese Abschnitte des Blickfeldes dann zu einem "elektronischen" Bild des Gesamtblickfeldes zusammengesetzt werden. Diese Detektoranordnung enthält ein erstes abbildendes optisches System 14. Das erste abbildende optische System 14 erzeugt in einer Zwischenbildebene 16 übereinanderliegende Bilder von verschiedenen Abschnitten des Blickfeldes.

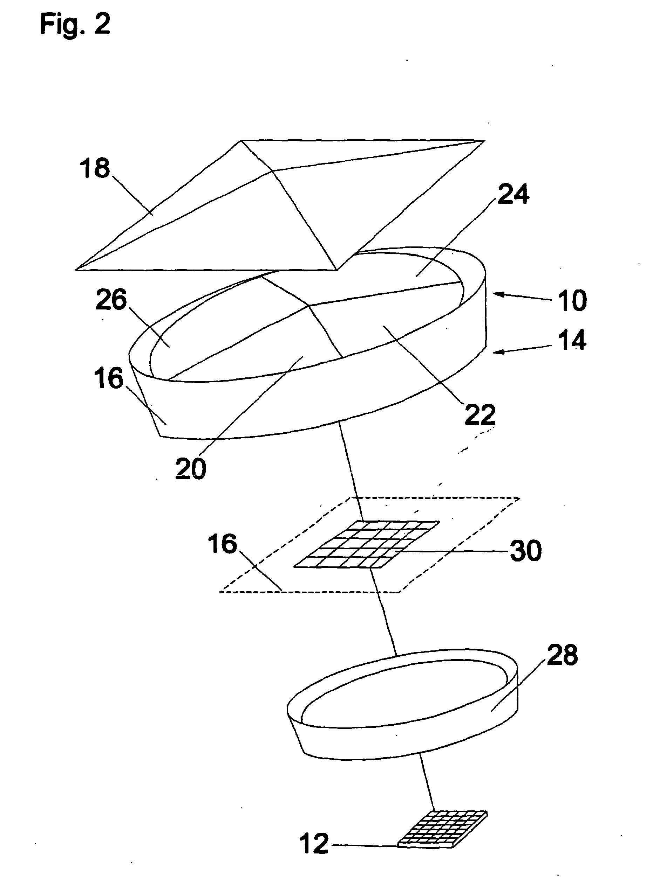

Zu diesem Zweck kann das erste abbildende optische System 14 ein Linsensystem sein, dem in der Eintritts-Pupille eine Prismen-Struktur 18 in Form einer flachen Pyramide vorgeschaltet ist. Dies ist in Fig. 2 dargestellt. Man kann dann die Pupille in Sektoren 20, 22, 24 und 26 unterteilt denken, wobei der Strahlengang jedes Sektors durch eine zugehörige Seitenfläche der Prismen-Struktur hindurchgeht. Dadurch werden verschiedene Abschnitte des Blickfeldes übereinander in die Zwischenbild-Ebene 16 abgebildet.

Ein zweites abbildendes optisches System 28 bildet die Zwischenbild-Ebene auf die zweidimensionale Anordnung 12 von Detektorelementen ab.

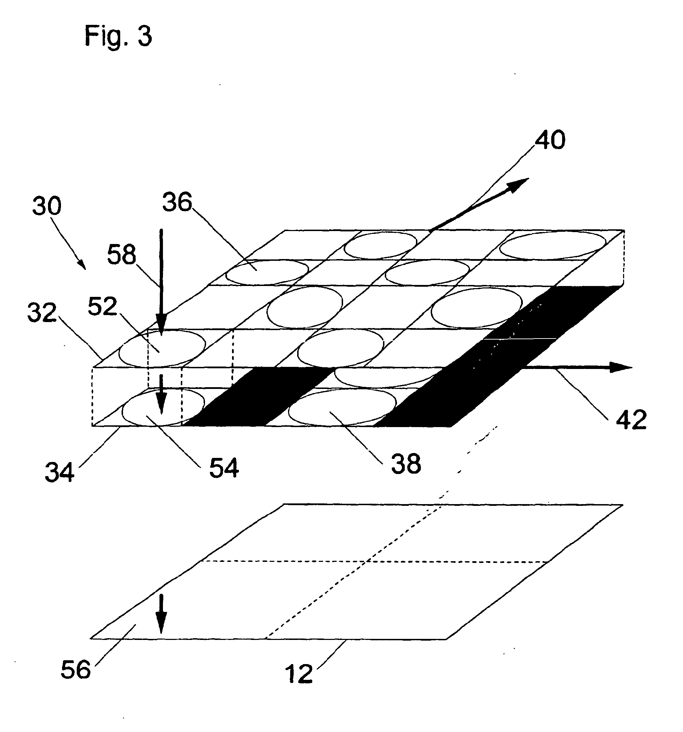

In der Zwischenbildebene 16 sitzt ein mikrooptisches Strahlenablenk-Element 30. Dieses mikrooptische Strahlenablenk-Element 30 enthält zwei gegeneinander verschiebbare mikrooptische Linsenraster 32 und 34 (Fig.3). Dabei ist das objektseitige mikrooptische Linsertraster 32 von Sammellinsen 36 gebildet. Das bildseitige mikrooptische Linsenraster 34 ist von Zerstreuungslinsen 38 gebildet. Das Linsenraster 32 kann in Richtung des Pfeils 40 verschoben werden. Das Linsenraster 34 kann in Richtung des Pfeils 42 verschoben werden. Die Verschiebung erfolgt in der Weise, daß nacheinander Strahlen aus den verschiedenen Sektoren 20, 22, 24 und 26 der Pupille des ersten abbildenden optischen Systems 14 auf das zweite abbildende optische System 28 geleitet und zur Erzeugung eines Bildes auf der Anordnung 12 von Detektorelementen herangezogen werden. Dadurch können mit einer einzigen Anordnung 32 von Detektorelementen nacheinander die verschiedenen Abschnitte des Blickfeldes erfaßt werden. Diese Abschnitte werden dann im Speicher "elektronisch" zu einem Gesamtbild des Blickfeldes oder der Objektszene zusammengesetzt. Dadurch kann ein großes Blickfeld mit der Auflösung erfaßt werden, die von der Anordnung 12 von Detektorelementen geliefert wird. Diese Anordnung 12 würde normalerweise nur ein kleineres Gesichtsfeld erfassen.

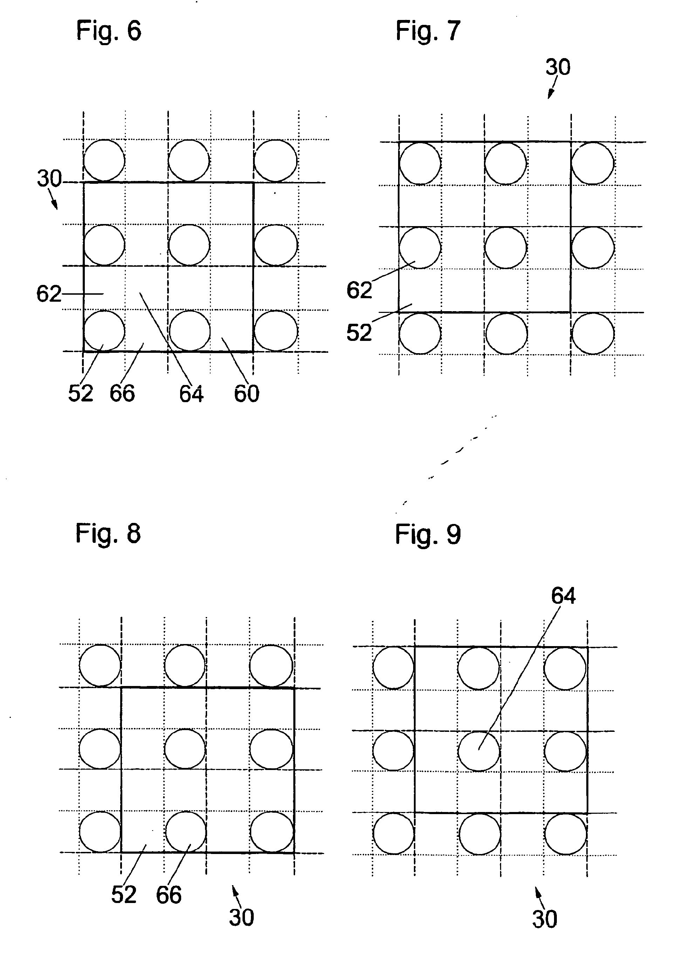

Die Verschiebung des mikrooptischen Linsenrasters 32 relativ zu dem Linsenraster 34 zur Umschaltung zwischen den verschiedenen Abschnitten des Blickfelds sind klein gegenüber dem Rastermaß Die Linsenraster 32 und 34 werden dabei in verschiedene Stellungen bewegt, wobei es in jeder dieser Stellungen die Strahlen aus einem der Sektoren 20, 22, 24 und 26 auf das zweite optische System 28 lenkt. Die verschiedenen Stellungen sind in den Figuren 6-9 dargestellt und unten näher erläutert.

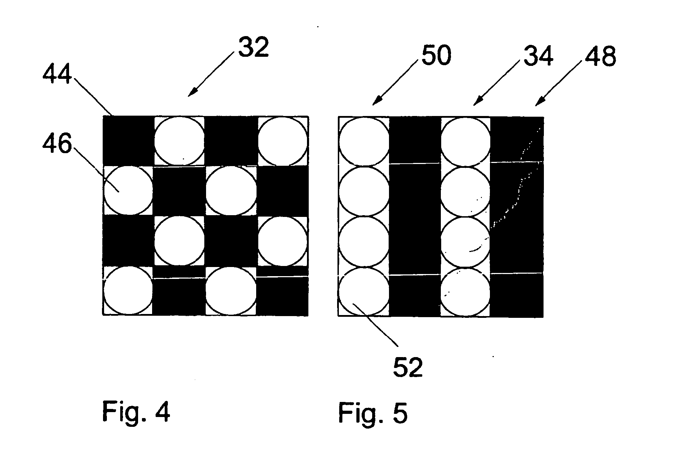

In Fig. 4 ist ein Ausschnitt aus dem mikrooptischen Linsenraster 32 im Detail gezeigt. Das mikrooptischen Linsenraster 32 ist schachbrettfömig aus opaken Feldern 44 und mikrooptischen Sammellinsen 46 aufgebaut. In Fig. 5 ist ein Ausschnitt des weiteren mikrooptischen Linsenrasters 34 gezeigt. Das mikrooptischen Linsenraster 34 ist aus opaken Streifen 48 und in Streifen 50 aus nebeneinander angeordneten mikrooptischen Zerstreuungslinsen 52 aufgebaut.

In den Figuren 6-9 sind die Linsenraster in verschiedenen relativen Lagen zueinander gezeigt. Der durch eine durchgezogene Linie in Fig.6 dargestellte Ausschnitt 60 entspricht einer Draufsicht auf die Linsenraster 32 und 34 in der in Fig.3 gezeigten Lage. Strahlung, repräsentiert durch einen Pfeil 58 in Fig.3, die durch die Sammellinse 52 in tritt, durchtritt die in dieser Stellung darunterliegende Zerstreuungslinse 54 und fällt somit auf das Detektorelement 56. Das benachbarte Feld 62 ist im Linsenraster 32 opak, so daß hier keine Strahlung durchgelassen wird. Die benachbarten Felder 64 und 66 liegen über den opaken Streifen 48 des darunter liegenden Linsenrasters 34. Durch diese Felder kann also ebenfalls keine Strahlung treten

In Fig. 7 ist die Situation dargestellt, bei welcher das Linsenraster 32 um ein Feld in Richtung des Pfeils 40 bewegt wurde. Diese Bewegung erfolgt mittels Piezoelementen in nur einer Richtung. In dieser Stellung wird nun Strahlung durch die im Feld 62 liegenden Linsen hindurch gelassen, während das Feld 52 opak ist.

In Fig.8 ist die Situation dargestellt, bei der nicht das Linsenraster 32, sondern das Linsenraster 34 gegenüber der Position in Fig.6 bewegt wurde. Die Bewegung des Linsenrasters 34 erfolgt in einer Richtung, die durch einen Pfeil 42 in Fig.3 dargestellt ist. In dieser Stellung wird nur Strahlung durch das Feld 66 und die jeweils korrespondierenden Felder jedes Quadranten hindurchgelassen

In Fig.9 ist die Situation dargestellt, bei der beide Linsenraster 32 und 34 in ihrer Bewegungsrichtung um jeweils ein Feld gegenüber der in Fig.6 dargestellten Situation bewegt werden. In diesem Fall wird die Strahlung durch die zum Feld 64 korrespondierenden Felder hindurch gelassen.

Durch geeignete Ansteuerung der Piezoelemente können auf diese Weise alle Punkte des Blickfeldes ausschließlich mit Linearbewegungen abgerastert werden. Dabei bleibt der Fehler auf den Fehler einer Linearbewegung beschränkt. Die Anordnung wird genutzt um die Auflösung des Detektors zu erhöhen. Durch Bewegung der Linsenraster 32 und 34 wird nacheinander Strahlung durch jeweils einen Quadranten aisf den Detektor durchgelassen. Es werden also vier Bilder aufgenommen, die elektronisch zu einem Bild mit vierfacher Auflösung zusammengesetzt werden können. Die Auflösungssteigerung wird dabei erreicht ohne den Detektor zu verändern.

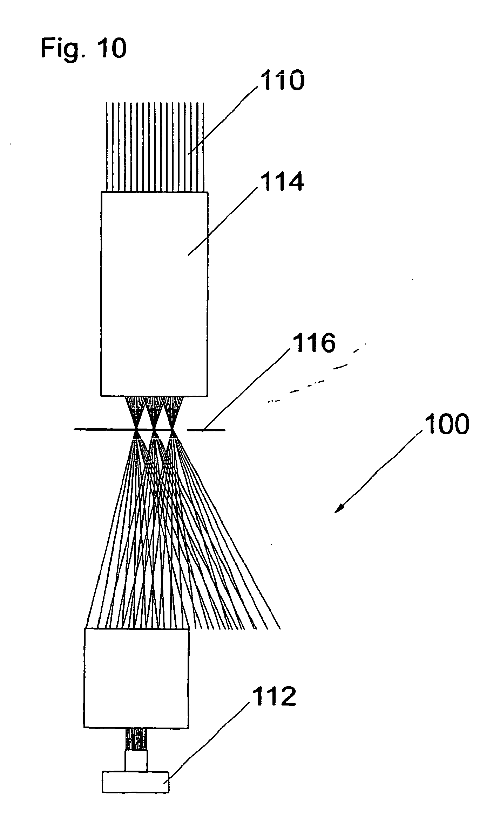

In Fig. 10 ist eine Anordnung dargestellt, bei der lediglich eine Auflösungssteigerung bewirkt werden soll. Auch hier wird die einfallende Strahlung 110 mittels eines ersten abbildenden optischen Systems 114 in eine Zwischenbildebene 116 abgebildet und mit einem Detektor 112 aufgenommen. Es ist jedoch keine Prismenstruktur 18 (Fig.2), sondern nur eine große Pupille vorgesehen. Mit dieser Anordnung erfolgt eine Auflösungssteigerung durch Punktbild-Multiplex aber keine Blickfeld-Erweiterung. Die Schaltung des optischen Mikrolinsen-Systems in der Zwischenbildebene bleibt dabei identisch zu dem oben beschriebenen.

## Patentansprüche

1. Bildauflösende Detektoranordnung (10, 100), auf welcher durch ein abbildendes optisches System (14, 114, 28) ein Bild einer Objektszene erzeugbar ist,
a) mit einer zweidimensionalen Anordnung (12, 112) von Detektorelementen (56), wobei jedem Detektorelement (56) ein Bildbereich in einer Bildebene (16, 116) zugeordnet ist und diese Bildbereich ein Rastermaß definieren,
b) mit einem in dieser Bildebene (16, 116) angeordneten Mikroblendenraster (32), welches ein erstes sich entsprechend dem Rastermaß der Bildbereiche wiederholendes Muster von durchlässigen (52) und opaken Teilbereichen (62, 64, 66) bildet, indem das Mikroblendenraster (32) schachbrettartig aus Feldern (44, 46) zum abwechselnden Blockieren und Durchlassen von Strahlung aufgebaut ist, so dass einem Bildbereich somit jeweils vier Felder (44, 46) zuzuordnen sind und ein solches Feld (44, 46) einen Teilbereich (52, 62, 64, 66) eines Bildbereichs darstellt,
c) wobei das Mikroblendenraster (32) in dieser Bildebene (16, 116) schrittweise beweglich ist, derart dass in jeder Stellung nur Strahlung von einem Teilbereich (52) jedes einem Detektorelement (56) zugeordneten Bildbereichs auf das Detektorelement (56) gelangt,
d) mit einem weiteren schrittweise beweglichen Mikroblendenraster (34), welches parallel zu dem ersten Mikroblendenraster (32) angeordnet ist, wobei das weitere Mikroblendenraster (34) ein weiteres sich entsprechend dem Rastermaß der Bildbereiche wiederholendes Muster von durchlässigen und opaken Teilbereichen bildet, indem das weitere Mikroblendenraster (34) aus durchlässigen Streifen (48) und opaken Streifen (50) aufgebaut ist, wobei die Streifen (48, 50) die gleiche Breite wie ein Feld (44, 46) des ersten Mikroblendenrasters (32) aufweisen und einem Bildbereich somit ein Streifen (48) umfassend zwei durchlässige Felder und ein Streifen (50) umfassend zwei opake Felder zuzuordnen ist,
e) wobei sich die Bewegungsrichtung (42) des weiteren Mikroblendenrasters (34) senkrecht zu den Streifen (48, 50) erstreckt,
f) wobei beide Mikroblendenraster (32, 34) nur in jeweils einer Richtung (40, 42) senkrecht zur optischen Achse beweglich sind, wobei die Bewegungsrichtungen (40, 42) der beiden Mikroblendenraster (32, 34) einen rechten Winkel miteinander bilden und die Schrittweite für beide Mikroblendenraster (32, 34) jeweils dem halben Rastermaß eines Bildbereichs entspricht,
g) wobei durch Überlagerung der Muster der beiden Mikroblendenraster (32, 34) in jeder Stellung der Mikroblendenraster (32, 34) ein Muster gebildet wird, das in jedem Bildbereich jeweils nur einen der betreffenden Stellung zugeordneten durchlässigen Teilbereich (52) aufweist, so dass durch entsprechende Bewegung der Mikroblendenraster (32, 34) nacheinander Strahlung aller Teilbereiche (52, 62, 64, 66) eines einem Detektorelement (56) zugeordneten Bildbereichs auf dieses Detektorelement (56) durchlassbar ist

2. Detektoranordnung (10, 100) nach Anspruch 1,
wobei wenigstens eines der Mikroblendenraster (32, 34) als Mikro-Linsen-Blendenarray ausgebildet ist.

3. Detektoranordnung (10, 100) nach Anspruch 2,
wobei das der Detektoranordnung (10, 100) abgewandte Mikro-Linsen-Blendenarray (32) als Mikro-Sammellinsen-Blendenarray ausgebildet ist und das detektorseitige Mikro-Linsen-Blendenarray (34) als Mikro-Streulinsen-Array ausgebildet ist.

4. Detektoranordnung (10) nach Anspruch 3,
wobei ein erstes abbildendes optisches System (14) vorgesehen ist, in dessen Pupille eine Mehrzahl von Pupillen-Bereichen gebildet sind, von denen jeder ein Gesichtsfeld auf einen gemeinsamen Bildebenen-Bereich abbildet, in welchem die Mikro-Linsen-Blendenarrays angeordnet sind.

## Claims

1. Image-resolving detector arrangement (10, 100) on which an imaging optical system (14, 114, 28) can produce an image of an object scene,
a) having a two-dimensional arrangement (12, 112) of detector elements (56), wherein each detector element (56) is associated with an image area on an image plane (16, 116), and these image areas define a grid size,
b) having a microaperture grid (32), which is arranged on this image plane (16, 116) and forms a first pattern, which is repeated corresponding to the grid size of the image areas, of transmissive subareas (52) and opaque subareas (62, 64, 66), in that the microaperture grid (32) is formed like a chessboard from fields (44, 46) for alternately blocking and transmitting radiation, such that in each case four fields (44, 46) can be associated with one image area, and one such field (44, 46) represents a subarea (52, 62, 64, 66) of an image area,
c) wherein the microaperture grid (32) can be moved in steps on this image plane (16, 116) such that, in each position, only radiation from one subarea (52) of each image area which is associated with one detector element (56) reaches the detector element (56).
d) having a further microaperture grid (34), which can be moved in steps and is arranged parallel to the first microaperture grid (32), wherein the further microaperture grid (34) forms a further pattern of transmissive and opaque subareas which is repeated corresponding to the grid size of the image areas, in that the further microaperture grid (34) is formed from transmissive strips (48) and opaque strips (50), wherein the strips (48, 50) have the same width as a field (44, 46) of the first microaperture grid (32), and a strip (48) comprising two transmissive fields and a strip (50) comprising two opaque fields can thus be associated with one image area,
e) wherein the movement direction (42) of the further microaperture grid (34) extends at right angles to the strips (48, 50),
f) wherein both microaperture grids (32, 34) can each move only in a direction (40, 42) at right angles to the optical axis, wherein the movement directions (40, 42) of the two microaperture grids (32, 34) form a right angle with one another, and the step width for both microaperture grids (32, 34) in each case corresponds to half the grid size of an image area,
g) wherein a pattern is formed by superimposition of the patterns of the two microaperture grids (32, 34) in each position of the microaperture grids (32, 34), which pattern in each case has only one transmissive subarea (52) which is associated with the relevant position in each image area, such that radiation of all the subareas (52, 62, 64, 66) of an image area which is associated with one detector element (56) can be passed through successively to this detector element (56) by appropriate movement of the microaperture grids (32, 34).

2. Detector arrangement (10, 100) according to Claim 1,
wherein at least one of the microaperture grids (32, 34) is in the form of a microlens aperture array.

3. Detector arrangement (10, 100) according to Claim 2, wherein the microlens aperture array (32) facing away from the detector arrangement (10, 100) is in the form of a microconvergent lens aperture array, and the detector-side microlens aperture array (34) is in the form of a microdivergent lens array.

4. Detector arrangement (10) according to Claim 3, wherein a first imaging optical system (14) is provided, in whose pupil a plurality of pupil areas are formed, each of which images a field of view onto a common image plane area, on which the microlens aperture arrays are arranged.

## Revendications

1. Détecteur de résolution d'image (10, 100) sur lequel un système optique de reproduction (14, 114, 28) permet de produire une image d'une scène objet,
a. avec une disposition bidimensionnelle (12, 112) d'éléments de détecteurs (56), chaque élément de détecteur (56) se voyant attribuer un espace image dans un plan image (16, 116) et ces espaces image définissant un pas de trame,
b. avec une trame à microdiaphragme (32) disposée dans ce plan image (16, 116), formant un premier motif d'éléments d'image transparents (52) et opaques (62, 64, 66) se répétant en fonction du pas de trame des espaces image, la trame à microdiaphragme (32) étant constituée à la manière d'un échiquier de champs (44, 46) pour alternativement bloquer et laisser passer du rayonnement, de telle sorte qu'un espace image se voit ainsi attribuer respectivement quatre champs (44, 46) et un tel champ (44, 46) représentant un élément d'image (52, 62, 64, 66) d'un espace image,
c. la trame à microdiaphragme (32) pouvant se déplacer pas à pas dans ce plan image (16, 116), de telle sorte que dans chaque position, seul le rayonnement d'un élément d'image (52) de chaque espace image attribué à un élément de détecteur (56), parvient sur l'élément de détecteur (56),
d. avec une trame à microdiaphragme supplémentaire (34) pouvant se déplacer pas à pas, disposée parallèlement à la première trame à microdiaphragme (32), la trame à microdiaphragme supplémentaire (34) formant un motif supplémentaire d'éléments d'image transparents et opaques se répétant en fonction du pas de trame des espaces image, la trame à microdiaphragme supplémentaire (34) étant constituée de bandes transparentes (48) et de bandes opaques (50), les bandes (48, 50) présentant la même largeur qu'un champ (44, 46) de la première trame à microdiaphragme (32) et un espace image se voyant ainsi attribuer une bande (48) comportant deux champs transparents et une bande (50) comportant deux champs opaques,
e. la direction du déplacement (42) de la trame à microdiaphragme supplémentaire (34) s'étendant perpendiculairement aux bandes (48, 50),
f. les deux trames à microdiaphragme (32, 34) ne pouvant respectivement se déplacer que dans une direction (40, 42) perpendiculaire à l'axe optique, les directions de déplacement (40, 42) des deux trames à microdiaphragme (32, 34) formant entre elles un angle droit et la dimension de pas des deux trames à microdiaphragme (32, 34) correspondant respectivement au demi pas de trame d'un espace image,
g. la superposition des motifs des deux trames à microdiaphragme (32, 34) dans chaque position des trames à microdiaphragme (32, 34) formant un motif qui, dans chaque espace image, ne comporte respectivement qu'un élément d'image transparent (52) attribué à la position concernée, de telle sorte que le déplacement correspondant des trames à microdiaphragme (32, 34) permette le passage successif du rayonnement de tous les éléments d'image (52, 62, 64, 66) d'un espace image attribué à un élément de détecteur (56) sur cet élément de détecteur (56).

2. Détecteur (10, 100) selon la revendication 1, dans lequel une au moins des trames à microdiaphragme (32, 34) est réalisée sous la forme d'un ensemble de microdiaphragmes à lentilles.

3. Détecteur (10, 100) selon la revendication 2,
dans lequel l'ensemble de microdiaphragmes à lentilles (32) opposé au détecteur (10, 100) est réalisé sous la forme d'un ensemble de microdiaphragmes à lentilles convergentes et dans lequel l'ensemble de microdiaphragmes à lentilles (34) côté détecteur est réalisé sous la forme d'un ensemble de microdiaphragmes à lentilles divergentes.

4. Détecteur (10) selon la revendication 3,
dans lequel on a prévu un premier système optique de reproduction (14) dans la pupille duquel on a formé une multiplicité d'espaces de pupilles dont chacun reproduit un champ de vision sur un espace de plan image commun dans lequel sont disposées les ensembles de microdiaphragmes à lentilles.
